# EUROPEAN PATENT APPLICATION

(11) **EP 0 603 730 A1**
(43) Date of publication of application: **29.06.1994**
(21) Application number: 93120222.0
(22) Date of filing: 15.12.1993
(51) Int. Cl.: B60C 19/12

(54) **Protecting means for tubes**

(30) Priority: 18.12.1992 IL 10416292
(71) Applicant: Amitai, Ya'acov, Tel Aviv (IL); Shneider, Arik, Natanya (IL)
(72) Inventor: Amitai, Ya'acov, Tel Aviv (IL); Shneider, Arik, Natanya (IL)
(74) Representative: Modiano, Guido, Dr.-Ing.

(57) **Abstract**

An improved protective means for inner inflatable tubes of motocycles and bicycles in a form of a rim the outer circumference is provided with logitudinal slots. The edges of said rim being oblique.

## Description

The present invention relates to improvements in and relating to bicycles and motocycles and more particularly to bicycle and motocycle wheels and to a new and improved protective guard for the inner tubes.

It is well known that the inner inflatable tube of vehicle wheels are subjected to different objects and obstacles which are harmful, namely, might cause puncture to the tube. It is more so regarding bicycle wheels due to the fact that the tyre of such wheels is relatively thin thus much more vulnerable.

There are known a number of such products which are described in US Patents: 3982577 and 4231407. The first patent relates to a protecting means similar to the present application, while the second patent describes a protecting means in the form of a strip which is cut to length. The protecting means described in 3982577 does not fulfil the function of protecting the tube due to its plain profile which also enables the movement of it within the tyre and it's heating up when in use.

It is the object of the present invention to provide means which will protect the tube from most objects which would cause punctures.

It is a further object of the invention to provide means which will give protection to the wheel.

It is yet a further object of the invention to provide protecting means which would not move within the tyre. According to the invention there is provided a rubber or a like material protecting means in the form of a rim the outer circumference is provided with longitudinal slots and which is inserted into the tyre intermediate the tyre and the tube.

In the preferred embodiment the ends of said rim are flattened towards the edges thereof. rubber strip is concave. The invention will now be described in accordance with the annexed drawings in which:
Fig. 1 is a perspective cross section of a wheel, tyre, tube and a protecting rim.
Fig. 2 is a cross section of the rim in a flattened position.
Fig. 3 is a top view of a rim according to the invention.

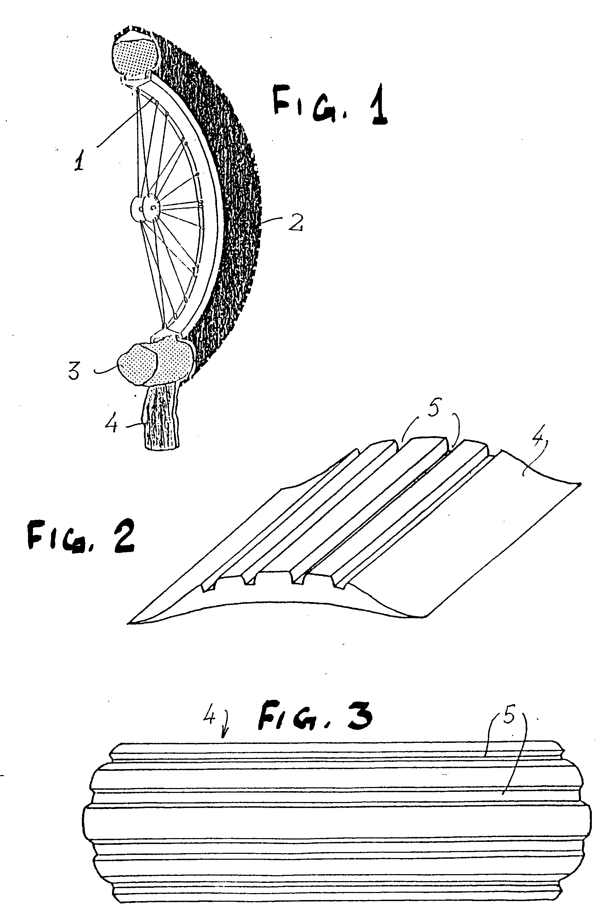

Turning first to Fig. 1 the wheel 1 is provided with a tyre 2, tube 3 and a protecting rim, according to the invention 4.

The rim 4 is inserted into the tyre by removing the tyre from the wheel placing the rim therein before the insertion of the tube 3.

The size of the rim is according to the size of the wheel and tyre.

The cross section of the rim is as illustrated in Fig. 2. It is quite obvious that such protecting strip protects the tube from objects which might cause punctures while at the same time protect the wheel from being harmed when the wheel hits a stone or the like as the shock is cushioned by the strip.

The longitudinal slots 5 provide ventilation to the rim which is heated up while riding a bicycle or motorcycle.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A protecting means for bicycles or the like tubes comprising a rubber or the like material in a form of a rim the outer circumference is provided with longitudinal slots and which is inserted into the tyre intermediate the tyre and the tube.

2. A protecting strip as claimed in claim 1, characterized thereby that the cross section of the strip is curved.

3. A protecting strip as claimed in claim 1, characterized thereby that the strip is provided with oblique edges.

4. Protecting strip, substantially as hereinbefore described and with reference to the accompanying drawings.
